# EUROPÄISCHE PATENTSCHRIFT

(11) **EP 2 788 598 B1**
(45) Veröffentlichungstag und Bekanntmachung des Hinweises auf die Patenterteilung: **09.03.2016**
(21) Anmeldenummer: 12769923.9
(22) Anmeldetag: 20.09.2012
(51) Int. Cl.: F01N 9/00, F02D 41/02, F02D 41/06, F02B 37/12

(54) **VERFAHREN UND VORRICHTUNG ZUM BETREIBEN EINER VERBRENNUNGSKRAFTMASCHINE MIT EINER ABGASREINIGUNGSEINHEIT**
METHOD AND DEVICE FOR OPERATING AN INTERNAL COMBUSTION ENGINE COMPRISING AN EXHAUST GAS CLEANING UNIT
PROCÉDÉ ET DISPOSITIF DE FONCTIONNEMENT D'UN MOTEUR À COMBUSTION INTERNE ÉQUIPÉ D'UN MODULE D'ÉPURATION DES GAZ D'ÉCHAPPEMENT

(30) Priorität: 07.12.2011 DE 102011120508
(43) Veröffentlichungstag der Anmeldung: 15.10.2014
(73) Patentinhaber: Daimler AG, 70327 Stuttgart (DE)
(72) Erfinder: KEPPELER, Berthold, 73277 Owen (DE)
(74) Vertreter: JENSEN & SON
(86) Internationale Anmeldenummer: PCT/EP2012/003938
(87) Internationale Veröffentlichungsnummer: WO 2013/083210

(56) Entgegenhaltungen:
- EP-A1- 1 672 205
- WO-A1-2007/033751
- DE-A1-102008 007 404
- DE-A1-102010 014 824

## Beschreibung

Die Erfindung betrifft ein Verfahren zum Betreiben einer Verbrennungskraftmaschine mit einer Abgasreinigungseinheit nach dem Oberbegriff des Anspruchs 1. Weiterhin betrifft die Erfindung eine Vorrichtung zum Betreiben einer Verbrennungskraftmaschine mit einer Abgasreinigungseinheit nach dem Oberbegriff des Anspruchs 10.

Die DE 10 2009 021 114 A1 beschreibt ein Verfahren zum Betreiben einer luftverdichtenden Brennkraftmaschine mit einem eine katalytisch und/oder filtertechnisch wirksame Abgasreinigungseinheit aufweisenden Abgastrakt. In dem Verfahren werden Brennräumen der Brennkraftmaschine Kraftstoff und ein zur wenigstens teilweisen Verbrennung des Kraftstoffes vorgesehenes, einen Luftanteil und einen Anteil von aus dem Abgastrakt rückgeführtem Abgas aufweisendes Verbrennungsgas zugeführt, wobei das rückgeführte Abgas mit einem Niederdruckanteil über einen stromab der Abgasreinigungseinheit vom Abgastrakt abzweigenden Niederdruckpfad und mit einem Hochdruckanteil über einen stromaufwärts einer Abgasturboladerturbine vom Abgastrakt abzweigenden Hochdruckpfad den Brennräumen zuführbar ist. Dabei ist vorgesehen, dass ein Sauerstoffmassengehalt im Verbrennungsgas im Wesentlichen durch Betätigung eines im Niederdruckpfad angeordneten Niederdruck-AGR-Ventils und/oder einer im Abgastrakt angeordneten Stauklappe und eines im Hochdruckpfad angeordneten Hochdruck-AGR-Ventils wenigstens annähernd auf einen vorgebbaren Sollwert eingestellt wird.

Die DE 10 2009 007 764 A1 beschreibt ein Verfahren zum Betreiben einer Brennkraftmaschine mit einer Abgasreinigungsanlage mit wenigstens einer katalytischen und/oder filterwirksamen Abgasreinigungskomponente. Bei dem Verfahren wird in Verbindung mit einem Kaltstart und/oder einem Warmlauf der Brennkraftmaschine die Brennkraftmaschine mit einem Kaltstartmotorbetriebsverfahren mit vorgebbaren Werten für vorgebbare Brennkraftmaschinenbetriebsgrößen betrieben. Dabei erfolgt eine Abschätzung einer HC-Speichermenge von in einer oder mehreren der wenigstens einen Abgasreinigungskomponente gespeicherten HC und das Kaltstartmotorbetriebsverfahren wird aktiviert, wenn die Abschätzung ergibt, dass die HC-Speichermenge einen vorgebbaren HC-Speichermengengrenzwert überschreitet.

EP 1 672 205 A offenbart eine Aufschaltung einer elektrischen Last auf den Generator einer noch nicht betriebswarmen Verbrennungskraftmaschine, um deren Beschädigung bei Regeneration des Partikelfilters mit noch nicht betriebswarmer Verbrennungskraftmaschine zu vermeiden.

Der Erfindung liegt die Aufgabe zu Grunde, ein verbessertes Verfahren und eine verbesserte Vorrichtung zum Betreiben einer Verbrennungskraftmaschine mit einer Abgasreinigungseinheit anzugeben.

Die Aufgabe wird erfindungsgemäß durch ein Verfahren zum Betreiben einer Verbrennungskraftmaschine mit einer Abgasreinigungseinheit mit den Merkmalen des Anspruchs 1 gelöst.

Hinsichtlich der Vorrichtung wird die Aufgabe mit einer Vorrichtung zum Betreiben einer Verbrennungskraftmaschine mit einer Abgasreinigungseinheit mit den Merkmalen des Anspruchs 10 gelöst.

Vorteilhafte Ausgestaltungen der Erfindung sind Gegenstand der Unteransprüche.

Beim Verfahren zum Betreiben einer Verbrennungskraftmaschine mit einer Abgasreinigungseinheit umfassend einen Partikelfilter, bei welchem in Verbindung mit einem Kaltstart und/oder einem Warmlauf der Verbrennungskraftmaschine die Verbrennungskraftmaschine mit einem Kaltstartmotorbetriebsverfahren mit vorgebbaren Werten für vorgebbare Verbrennungskraftmaschinebetriebsgrößen betrieben wird, wird erfindungsgemäß der Kaltstart und/oder der Warmlauf der Verbrennungskraftmaschine in Abhängigkeit von einer Rußbeladung eines Partikelfilters gesteuert und/oder geregelt. Dadurch ist eine kontrollierte und besonders schnelle Temperierung der Abgasreinigungseinheit oder zumindest von einzelnen Abgasreinigungskomponenten ermöglicht, woraus eine besonders schnelle Betriebsbereitschaft der Abgasreinigungseinheit und eine besonders effiziente Abgasreinigung resultieren.

Die Temperierung der Abgasreinigungseinheit erfordert üblicherweise extreme Temperaturgradienten in einer Aufheizphase direkt nach einem Start der Verbrennungskraftmaschine um vorzugsweise vorhandene katalytisch wirksame Komponenten der Abgasreinigungseinheit rasch in den Temperaturbereich ihrer Wirksamkeit zu bringen und damit den Schadstoffausstoß möglichst gering zu halten. Dabei steigt das Risiko, dass im Partikelfilter gespeicherter Ruß unkontrolliert zündet. Die daraus resultierenden stark exothermen Reaktionen können den Partikelfilter schädigen oder zumindest eine Katalysatoralterung deutlich verstärken. Dies ist mit dem vorliegenden Verfahren sicher vermieden. Unter einem Kaltstart wird dabei ein Start der Verbrennungskraftmaschine unter Bedingungen verstanden, bei denen die Temperatur des Kühlmittels unterhalb von 50 °C, insbesondere unterhalb von 20°C und/oder eine Temperatur innerhalb der Abgasreinigungseinheit unterhalb 250 °C, insbesondere unterhalb 200 °C liegt. Entsprechend wird unter einem Warmlauf ein sich an einen Kaltstart anschließender Betrieb der Verbrennungskraftmaschine verstanden, bei welchem das Kühlmittel bzw. die Abgasreinigungseinheit die genannten Temperaturen noch nicht erreicht haben. Der Warmlaufbetrieb wird vorzugsweise unmittelbar nach Erreichen der genannten Temperaturwerte beendet und es werden für einen normalen Verbrennungskraftmaschinenbetrieb vorgesehene Werte der Betriebsgrößen eingestellt.

Besonders bevorzugt wird der teilbeladene Partikelfilter, bei einer einen vorgebbaren zweiten Sollwert unterschreitenden Rußbeladung, mit einer gesteuerten und/oder geregelten Rußoxidation auf eine vorgebbare Betriebstemperatur aufgeheizt. Dies ermöglicht im Warmlauf gegebenenfalls einen kontrollierten Abbau des im Partikelfilter gespeicherten Rußes, wobei eine infolge der durch die Rußoxidation frei werdenden Wärme gesteigerte dabei aber gleichzeitig kontrollierte Aufheizgeschwindigkeit des Partikelfilters ermöglicht ist. Somit kann die Aufheizung der Abgasreinigungseinheit in vorteilhafter Weise durch eine kontrollierte Rußoxidation unterstützt werden.

Erfindungsgemäß wird bei einem im Wesentlichen unbeladenen Partikelfilter eine Aufheizung der Abgasreinigungseinheit mit einem vorgebbaren maximalen Temperaturgradienten auf eine vorgebbare Betriebstemperatur durchgeführt. Dies ermöglicht eine besonders schnelle Aufheizung der gesamten Abgasreinigungseinheit und daher eine verringerte Warmlaufzeit und eine daraus resultierende schnelle Betriebsbereitschaft und effiziente Abgasreinigung, wobei keine Entzündung des Rußes im Partikelfilter auftreten kann. Unter einem im Wesentlichen unbeladenen Partikelfilter wird dabei verstanden, dass der Partikelfilter eine Rußbeladung von weniger als 1 g je Liter Partikelfiltervolumen, insbesondere von weniger als 0,5 g/l aufweist. Der maximale Temperaturgradient wird dabei in Abhängigkeit eines unter den vorliegenden Bedingungen realisierbaren möglichst hohen Wertes durch Einstellung entsprechender Werte von Verbrennungskraftmaschinenbetriebsgrößen geeignet festgelegt und kann etwa 100 °C bis 500 °C je Minute betragen.

Erfindungsgemäß wird bei einem Partikelfilter mit einer einen vorgebbaren ersten Schwellenwert überschreitenden Rußbeladung eine derartige Aufheizung der Abgasreinigungseinheit im Warmlauf durchgeführt, dass eine Temperatur im Partikelfilter unterhalb einer Entzündungstemperatur des gespeicherten Rußes eingestellt wird. Dadurch ist eine unkontrollierte Entzündung des im Partikelfilter abgelagerten Rußes im Warmlauf vermieden. Der erste Schwellenwert für die Rußbeladung entspricht dabei einer vergleichsweise großen Rußbeladung von mehr als etwa 5 g/l, insbesondere von mehr als 6 g/l. Bei diesen Werten für die Rußbeladung würde ein unkontrollierter Rußabbrand in kurzer Zeit eine sehr hohe Wärmemenge freisetzen, was infolge einer limitierten Wärmeabfuhr zu einer Überhitzung von Komponenten der Abgasreinigungseinheit und insbesondere des Partikelfilters führen würde und die Komponenten oder den Partikelfilter schädigen oder zerstören kann. Bei einer Rußentzündungstemperatur von etwa 550 °C wird daher der Warmlauf so durchgeführt, dass die Maximaltemperatur des Partikelfilters im Warmlaufbetrieb 550°C unterschreitet.

In einer bevorzugten Ausgestaltung des Verfahrens wird dabei eine derartige Steuerung und/oder Regelung der Verbrennungskraftmaschine im Warmlauf durchgeführt, dass ein Lambdawert der Verbrennung innerhalb der Verbrennungskraftmaschine unterhalb eines vorgebbaren Wertes gehalten wird. Vorzugsweise wird der Lambdawert der Verbrennung unterhalb etwa 1,2 gehalten. Dadurch kann der Sauerstoffgehalt im Abgas auf einem derart niedrigen Wert gehalten werden, dass ein Rußabbrand im Partikelfilter verhindert ist oder doch zumindest die Geschwindigkeit eines gegebenenfalls unbeabsichtigt erfolgenden Rußabbrands auf einen unkritischen Wert limitiert ist.

Besonders bevorzugt wird bei einem beladenen Partikelfilter eine derartige Steuerung und/oder Regelung der Verbrennungskraftmaschine im Warmlauf durchgeführt, dass ein Abgasmassenstrom maximiert wird. Dadurch ist einerseits eine besonders rasche Aufheizung von Komponenten der Abgasreinigungseinheit ermöglicht, andererseits ist eine Wärmeabfuhr aus dem Partikelfilter erhöht, so dass die Gefahr einer Überhitzung infolge von Rußabbrand weiter vermindert ist.

Zweckmäßigerweise wird beim Warmlauf eine derartige Steuerung und/oder Regelung der Verbrennungskraftmaschine durchgeführt, dass ein Start-Stopp-Betrieb der Verbrennungskraftmaschine deaktiviert wird. Somit ist ein Abschalten der Verbrennungskraftmaschine in Leerlaufphasen, die in den Warmlauf der Verbrennungskraftmaschine fallen und somit eine Unterbrechung des Betriebs der Verbrennungskraftmaschine in der Warmlaufphase und eine daraus resultierende Aus- oder Abkühlung der Abgasreinigungseinheit sicher vermieden.

Bei einem teilbeladenen Partikelfilter mit einer einen vorgebbaren zweiten Schwellenwert unterschreitenden Rußbeladung wird besonders bevorzugt eine Aufheizung der Abgasreinigungseinheit mit einem vorgebbaren maximalen Temperaturgradienten auf eine vorgebbare Betriebstemperatur, welche oberhalb einer Entzündungstemperatur des gespeicherten Rußes liegt, durchgeführt, wobei eine Entzündung des Rußes erfolgt. Somit erfolgt während des Warmlaufs ein Rußabbrand im Partikelfilter, dessen Wärmefreisetzung die Aufheizung der Abgasreinigungseinheit weiter beschleunigt. Vorzugsweise wird dieses Warmlaufbetriebsverfahren durchgeführt, wenn die Rußbeladung des Partikelfilters größer Null, jedoch kleiner als etwa 4 g/l, insbesondere kleiner als 3 g/l zu Beginn des Warmlaufs ist. Vorzugsweise wird bei dem hier in Rede stehenden Warmlaufverfahren mit teilbeladenem Partikelfilter eine Temperaturregelung auf der Basis einer ausgangsseitig des Partikelfilters erfolgenden Temperaturmessung durchgeführt. Demgegenüber wird bei Warmlaufvarianten, bei welchen kein Rußabbrand im Partikelfilter möglich bzw. vorgesehen ist eine Temperaturregelung der Aufheizung auf der Basis einer stromauf des Partikelfilters gemessenen Führungstemperatur vorgenommen. Außerdem kann bei einem Warmlauf, bei welchem ein Rußabbrand im Partikelfilter erfolgt oder vorgesehen ist, ein Start-Stopp-Betrieb mit Abschaltung der Verbrennungskraftmaschine in Leerlaufbetriebsphasen zugelassen sein.

In einer besonders vorteilhaften Ausführungsform wird ein mit Ruß beladener Partikelfilter bei warmgelaufener Verbrennungskraftmaschine auf einen teilbeladenen Zustand mit einem vorgebbaren Wert der Rußbeladung regeneriert. Bevorzugt wird die Mehrzahl aller erzwungenen Partikelfilterregenerationen so durch geführt, dass eine Restbeladung an Ruß im Partikelfilter nach Abschluss der Regeneration verbleibt. Dadurch ist einerseits die Dauer von im normalen Betrieb erfolgenden Regeneration des Partikelfilters verkürzt. Andererseits kann ein Abbrand des verbliebenen Rußes im Partikelfilter in einem nach Abstellen der Verbrennungskraftmaschine mit teilbeladenem Filter erfolgenden Warmlauf in vorteilhafter Weise unterstützen.

Durch das erfindungsgemäße Verfahren ist einerseits ein Kraftstoffverbrauch der Verbrennungskraftmaschine bei der Regeneration des Partikelfilters und bei einem Warmlauf reduzierbar. Weiterhin ist eine Katalysatoralterung während der Regeneration des Partikelfilters aufgrund der verminderten thermischen Belastung verringert.

Weiterhin ist mittels des erfindungsgemäßen Verfahrens eine Schmiermittelverdünnung des in der Verbrennungskraftmaschine geführten Schmiermittels, welches durch eine herkömmliche Nacheinspritzstrategie bei der Regeneration des Partikelfilters auftritt, verringert.

Zweckmäßigerweise sind eine Emissionsbelastung sowie ein Schadstoffausstoß der Verbrennungskraftmaschine verringerbar.

Besonders vorteilhafterweise ist mittels des im Partikelfilter verbleibenden Restrußes eine Rußabscheideeffektivität des Partikelfilters steigerbar. Dadurch können porösere Partikelfiltersubstrate, welche insbesondere eine sogenannte selektive katalytische Reduktion ermöglichen, eingesetzt werden.

Bei der Vorrichtung zum Betreiben einer Verbrennungskraftmaschine mit einer Abgasreinigungseinheit mit wenigstens einer katalytischen und/oder filterwirksamen Abgasreinigungskomponente, bei welcher in Verbindung mit einem Kaltstart und/oder einem Warmlauf der Verbrennungskraftmaschine die Verbrennungskraftmaschine mit einem Kaltstartmotorbetriebsverfahren mit vorgebbaren Werten für vorgebbare Verbrennungskraftmaschinenbetriebsgrößen betreibbar ist, ist der Kaltstart und/oder der Warmlauf der Verbrennungskraftmaschine erfindungsgemäß in Abhängigkeit einer Rußbeladung eines Partikelfilters der Abgasreinigungseinheit steuer- und/oder regelbar, wobei eine Rußbeladung des Partikelfilters anhand einer Differenzdruckmessung eines Abgasgegendrucks vor und nach dem Partikelfilter und/oder einem in einer Steuereinheit hinterlegten Berechnungsmodell einer Rußbeladung des Partikelfilters in Abhängigkeit von auftretenden Betriebszuständen der Verbrennungskraftmaschine ermittelbar ist.

Ausführungsbeispiele der Erfindung werden im Folgenden anhand einer Zeichnung näher erläutert.

Dabei zeigt:

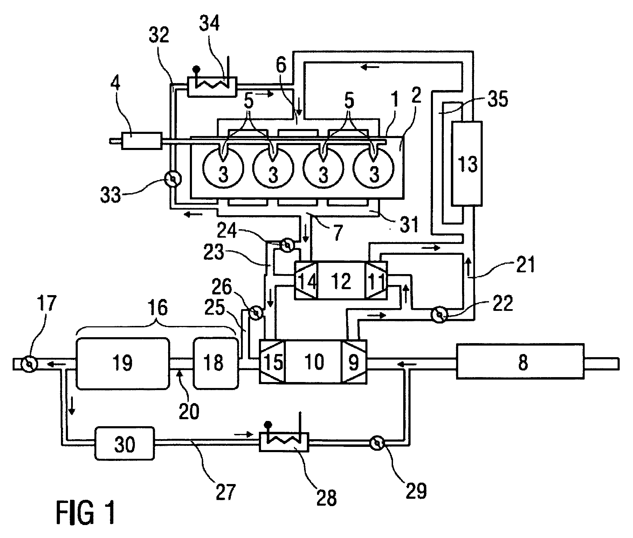

- Fig. 1: schematisch eine zur Durchführung des erfindungsgemäßen Verfahrens geeignete Verbrennungskraftmaschine mit einer Aufladung und einer Abgasrückführung.

Figur 1 zeigt schematisch eine zur Durchführung des erfindungsgemäßen Verfahrens geeignete Verbrennungskraftmaschine 1 mit einer Aufladung und einer Abgasrückführung. Dabei ist die Verbrennungskraftmaschine 1 bevorzugt als herkömmliche luftverdichtende Verbrennungskraftmaschine mit zweistufiger Aufladung und zweistufiger Abgasrückführung ausgebildet.

Die Verbrennungskraftmaschine 1 umfasst einen Motorblock 2 mit Arbeitszylindern 3 mit nicht näher gekennzeichneten Brennräumen, wobei den Arbeitszylindern 3 oder deren jeweiligem Brennraum mittels einer Hochdruckpumpe 4 und entsprechenden Einspritzdüsen 5 Kraftstoff zuführbar ist.

Eine Frischluftanlage 6 führt den Arbeitszylindern 3 oder deren jeweiligem Brennraum Frischluft als Verbrennungsluft zu und ein Abgastrakt 7 führt Abgas aus den Arbeitszylindern 3 ab. In der Frischluftanlage 6 sind in Strömungsrichtung der Frischluft gesehen ein Luftfilter 8, ein erster Verdichter 9 eines Niederdruck-Abgasturboladers 10, ein zweiter Verdichter 11 eines Hochdruck-Abgasturboladers 12 und zumindest ein Ladeluftkühler 13 angeordnet.

Im Abgastrakt 7 sind ausgehend vom Motorblock 2 in Strömungsrichtung des Abgases eine erste Turbine 14 des Hochdruck-Abgasturboladers 12, eine zweite Turbine 15 des Niederdruck-Abgasturboladers 10, eine Abgasreinigungseinheit 16 und eine nachgeschaltete Abgasaufstauklappe 17 angeordnet.

Die Abgasreinigungseinheit 16 umfasst bevorzugt zumindest einen Oxidationskatalysator 18 und einen Partikelfilter 19 zwischen denen ein Dosierventil 20 für eine harnstoffwässrige Lösung in den Abgastrakt 7 mündet. Der Partikelfilter 19 kann in Sintermetallausführung oder als wanddurchströmte Filtereinheit in Wabenkörperbauweise oder auch als Stickoxid-Speicherkatalysator oder auch als Kombination von beiden ausgebildet sein. Weiterhin kann die Abgasreinigungseinheit 16 eine oder mehrere weitere reinigungswirksame Abgasnachbehandlungseinheiten, wie beispielsweise einen SCR-Katalysator und/oder einen Stickoxid-Speicherkatalysator umfassen.

Derartige Abgasreinigungseinheiten sind dem Fachmann bekannt, weshalb hier nicht näher darauf eingegangen wird. Ohne Einschränkung der Allgemeinheit wird nachfolgend davon ausgegangen, dass die Abgasreinigungseinheit 16 einen Partikelfilter 19 mit vorgeschaltetem Oxidationskatalysator 18 und Dosierventil 20 für eine harnstoffwässrige Lösung umfasst.

Stromauf des zweiten Verdichters 11 zweigt eine den Hochdruck-Abgasturbolader 12 umgehender Verdichterbypassleitung 21 ab, in welcher ein Verdichterbypassventil 22 angeordnet ist, so dass mittels des ersten Verdichters 9 komprimierte Frischluft bzw. ein Frischluft-Abgasgemisch, abhängig von einem Betriebszustand der Verbrennungskraftmaschine 1 und einer daraus resultierenden Stellung des Verdichterbypassventils 22, beispielsweise bei vollständig geschlossenem Verdichterbypassventil 22 den zweiten Verdichter 11 passieren kann und dadurch weiter komprimierbar ist, oder bei vollständig geöffnetem Verdichterbypassventil 22 den zweiten Verdichter 11 über die Verdichterbypassleitung 21 umströmt oder bei teilweise geöffnetem Verdichterbypassventil 22 ein Teil des Frischluft-Abgasgemisches komprimierbar ist. Auf diese Weise ist ein Ladedruck der Verbrennungskraftmaschine 1 regelbar bzw. bei niedrigen Drehzahlen der Verbrennungskraftmaschine 1, bei welchen der Hochdruck-Abgasturbolader 12 aufgrund eines zu geringen Abgasdrucks noch nicht betreibbar ist, der zweite Verdichter 11 über die Verdichterbypassleitung 21 umgehbar.

Im Abgastrakt 7 ist eine erste Turbinenbypassleitung 23 angeordnet, in welcher ein erstes Turbinenbypassventil 24 angeordnet ist und welche die erste Turbine 14 umgeht. Weiterhin ist im Abgastrakt 7 eine zweite Turbinenbypassleitung 25 angeordnet, in welcher ein zweites Turbinenbypassventil 26 angeordnet ist und welche die zweite Turbine 15 umgeht.

Bei niedrigen Drehzahlen der Verbrennungskraftmaschine 1 und daraus folgend einem niedrigen Abgasdruck ist der Hochdruck-Abgasturbolader 12 noch nicht betreibbar, daher ist in diesem Betriebszustand das erste Turbinenbypassventil 24 derart ansteuerbar, dass ein Abgasmassenstrom über die erste Turbinenbypassleitung 23 an der ersten Turbine 14 vorbei leitbar ist und so vollständig zum Antrieb der zweiten Turbine 15 des Niederdruck-Abgasturboladers 10 nutzbar ist.

Bei sehr hohen Drehzahlen der Verbrennungskraftmaschine 1 ist der auf die Turbinen 14, 15 der Abgasturbolader 10, 12 einwirkende Abgasdruck sehr hoch, wodurch diese sehr hohe Drehzahlen erreichen. Daraus resultiert eine sehr hohe Verdichterleistung der Verdichter 9, 11 der Abgasturbolader 10, 12 und dadurch ein sehr hoher Ladedruck des Frischluft-Abgasgemisches. Dieser darf jedoch einen vorgebbaren Wert nicht überschreiten, so dass bei Erreichen dieses vorgebbaren Wertes ein oder beide Turbinenbypassleitungen 23, 25 aktivierbar und als sogenanntes Wastegate nutzbar sind. Dabei sind die Turbinenbypassventile 24, 26 derart ansteuerbar, dass sie beispielsweise teilweise öffnen, wodurch ein Teil des Abgasmassenstroms an den Turbinen 14, 15 vorbei leitbar und dadurch der auf die Turbinen 14, 15 einwirkende und diese antreibende Abgasdruck verringerbar ist. Daraus resultiert eine geringere Kompression des durch die Verdichter 9, 11 der Abgasturbolader 10, 12 verdichteten Gases, woraus ein geringerer Ladedruck resultiert.

Mittels dieser Anordnung des Niederdruck-Abgasturboladers 10 und des Hochdruck-Abgasturboladers 12 ist eine Leistung der Verbrennungskraftmaschine 1 in unterschiedlichen Drehzahlbereichen optimierbar und ein jeweils optimaler Ladedruck bereitstellbar. Dadurch ist insbesondere ein sogenanntes Turboloch, d. h. ein fehlender oder sehr geringer Ladedruck und daraus resultierend eine geringe Leistung einer derartigen Brennkraftmaschine 1 in niedrigen Drehzahlbereichen verhinderbar oder dieses Problem zumindest deutlich reduzierbar und damit beispielsweise ein Fahrverhalten und ein Treibstoffverbrauch eines durch diese Verbrennungskraftmaschine 1 angetriebenen Fahrzeugs optimierbar.

Stromab der Abgasreinigungseinheit 16, insbesondere auf einer Niederdruckseite des Abgastrakts 7, zweigt vom Abgastrakt 7 eine Niederdruck-Abgasrückführungs-Leitung 27 ab, die stromauf des ersten Verdichters 9 des Niederdruck-Abgasturboladers 10 und stromab des Luftfilters 8 wieder in die Frischluftanlage 6 mündet. In der Niederdruck-Abgasrückführungs-Leitung 27 ist ausgehend von der Abzweigung vom Abgastrakt 7 in Strömungsrichtung eines Niederdruck-Abgasrückführungs-Massenstroms gesehen ein Niederdruck-Abgasrückführungs-Kühler 28 und ein Niederdruck-Abgasrückführungs-Ventil 29 angeordnet. Optional kann die Kühlung des Niederdruck-AbgasrückführungsMassenstroms unter Entfall des Niederdruck-Abgasrückführungs-Kühlers 28 über die verwendeten Rohrlängen oder Rohrgestaltungen erfolgen. Die Kühlung des Niederdruck-Abgasrückführungs-Massenstroms stellt sicher, dass an den Verdichtern 9, 11 im Abgasrückführungsbetrieb keine unzulässig hohen Temperaturen auftreten.

Weiterhin ist in der Niederdruck-Abgasrückführungs-Leitung 27 ein sogenannter SCR-Katalysator 30 angeordnet, mittels dem eine selektive katalytische Reduktion des Niederdruck-Abgasrückführungs-Massenstroms ermöglicht ist.

Stromauf der ersten Turbine 14 des Hochdruck-Abgasturboladers 12, insbesondere auf einer Hochdruckseite der Abgasanlage 7, zweigt von einem Abgaskrümmer 31 des Abgastrakts 7 eine Hochdruck-Abgasrückführungs-Leitung 32 ab, die stromaufwärts des Ladeluftkühlers 13 in die Frischluftanlage 6 mündet. Mittels dieser Hochdruck-Abgasrückführungs-Leitung 32 ist ein Hochdruck-Abgasrückführungs-Massenstrom über ein Hochdruck-Abgasrückführungs-Ventil 33 in die Frischluftanlage 6 leitbar. In der dargestellten Ausführungsform ist in der Hochdruck-Abgasrückführungs-Leitung 32 ein Hochdruck-Abgasrückführungs-Kühler 34 angeordnet, welcher gegebenenfalls mit dem Niederdruck-Abgasrückführungs-Kühler 28 baulich und/oder funktionell vereinigt sein kann. Optional kann jedoch eine Kühlung des Hochdruck-Abgasrückführungs-Massenstroms beispielsweise auch über eine entsprechend ausgestaltete Rohrlänge der Hochdruck-Abgasrückführungs-Leitung 32 erfolgen.

Die dargestellte Verbrennungskraftmaschine 1 weist somit eine Abgasrückführung auf, bei der Abgas stromauf der ersten Turbine 14 des Hochdruck-Abgasturboladers 12 über einen entsprechenden Hochdruckpfad sowie stromab der Abgasreinigungseinheit 16 über einen entsprechenden Niederdruckpfad dem Abgastrakt 7 entnehmbar ist und nach Abkühlung stromauf des ersten Verdichters 9 des Niederdruck-Abgasturboladers 10 sowie stromaufwärts des Ladeluftkühlers 13 der Frischluftanlage 6 und damit den Brennräumen der Verbrennungskraftmaschine 1 zuführbar ist. Die Verbrennungskraftmaschine 1 ist dabei wahlweise ohne Abgasrückführung, mit Hochdruck-Abgasrückführung oder Niederdruck-Abgasrückführung oder gleichzeitig mit Hochdruck-Abgasrückführung und Niederdruck-Abgasrückführung betreibbar. Somit ist den Brennräumen der Verbrennungskraftmaschine 1 ein Verbrennungsgas mit einer in weiten Grenzen veränderbaren Abgasrückführrate zuführbar. Eine Einstellung einer Abgasrückführungsmenge, d. h. des rückgeführten Abgasmassenstromes und damit einer sogenannten AGR-Rate, erfolgt mittels der Abgasaufstauklappe 17 und/oder des Niederdruck-Abgasrückführungs-Ventils 29 sowie mittels des Hochdruck-Abgasrückführungs-Ventils 33, womit der Niederdruckanteil sowie der Hochdruckanteil des insgesamt rückgeführten Abgases ebenfalls in weiten Grenzen und unabhängig voneinander einstellbar sind. Dies erzielt insgesamt saubere Abgasrückführungsmassenströme, eine bessere Abkühlung der Abgasrückführungsmassenströme, keine Versottung der Abgasrückführungskühler 28, 34 und eine gute Durchmischung der Abgasrückführungsmassenströme mit Frischluft in der Frischluftanlage 6. Es sind vorteilhafterweise hohe Abgasrückführungsraten möglich und es ist ein homogener oder zumindest teilhomogener Betrieb der Verbrennungskraftmaschine 1 ermöglicht.

Die Abgasaufstauklappe 17 und das Niederdruck-Abgasrückführungs-Ventil 29 sind vorliegend Stellglieder einer als Vorsteuerregelung ausgeführten Abgasrückführungsregelung. Sowohl das Niederdruck-Abgasrückführungs-Ventil 29 wie die Abgasaufstauklappe 17 sind vorzugsweise kontinuierlich verstellbar. Mit Hilfe der Abgasaufstauklappe 17 und des Niederdruck-Abgasrückführungs-Ventil 29 vor dem ersten Verdichter 9 ist der Niederdruckanteil am gesamten Abgasrückführungsmassenstrom einstellbar und letzterer somit ebenfalls beeinflussbar. Solange ein ausreichendes Druckgefälle zur Förderung des Niederdruck-Abgasrückführungsmassenstroms vorhanden ist, ist dieser zunächst ausschließlich über das Niederdruck-Abgasrückführungs-Ventil 29 einstellbar. Ist dies nicht mehr der Fall, ist zusätzlich die Abgasaufstauklappe 17 anstellbar, um ein Druckgefälle gegenüber dem Niederdruck-Abgasrückführungs-Ventil 29 zu erhöhen. Dadurch ist eine sehr gute Durchmischung des Niederdruck-Abgasrückführungsmassenstroms mit der Frischluft sichergestellt. Ein weiterer Vorteil besteht unter anderem darin, dass das über den Niederdruckpfad rückgeführte Abgas sauber und nahezu pulsationsfrei ist. Zusätzlich steht eine erhöhte Verdichterleistung zur Verfügung, da bei einem hohen Niederdruckanteil rückgeführten Abgases ein vergleichsweise hoher Abgasmassenstrom durch die Turbinen 14, 15 leitbar ist. Da das rückgeführte Abgas nach den Verdichtern 9, 11 durch den Ladeluftkühler 13 leitbar ist, kann die Temperatur des Frischluft und Abgas umfassenden Verbrennungsgases signifikant gesenkt werden. Die Verbrennungskraftmaschine 1 ist je nach Bedarf sowohl mit der Hochdruck-Abgasrückführung als auch mit der Niederdruck-Abgasrückführung oder mit beiden betreibbar. Mittels einer vorzugsweise vorgesehenen, den Ladeluftkühler 13 umgehenden Ladeluftkühlerbypassleitung 35 in der Frischluftanlage 6, ist eine Versottung des Ladeluftkühlers 13 vermeidbar. Die Gefahr einer sogenannten Versottung besteht beispielsweise, wenn ein Wasserdampf und gegebenenfalls Partikel enthaltendes Gasgemisch im Ladeluftkühler 13 unter den Taupunkt abgekühlt wird und eine entsprechende Kondensatbildung auf- oder eintritt.

Vorzugsweise ist vorgesehen, dass das gesamte Frischluft-Abgasgemisch oder auch nur ein Teil davon über die Ladeluftkühlerbypassleitung 35 am Ladeluftkühler 13 vorbei geleitet werden kann, wodurch es durch den Ladeluftkühler 13 nicht kühlbar ist und daher die Temperatur nicht unter den Taupunkt abfällt. Um sicherzustellen, dass das Frischluft-Abgasgemisch, wenn nötig, d. h. bei hohen Temperaturen des Frischluft-Abgasgemisches, weiterhin mittels des Ladeluftkühlers 13 effektiv kühlbar ist, ist stromab der Verdichter 9, 11 und stromauf des Ladeluftkühlers 13 in der Frischluftanlage 6 ein nicht dargestellter Temperatursensor angeordnet, so dass bei Erreichen einer vorgebbaren Temperatur ein in der Ladeluftkühlerbypassleitung 35 angeordnetes Ladeluftkühlerbypassventil 36 entsprechend ansteuerbar ist und daraufhin dieses Ladeluftkühlerbypassventil 36 beispielsweise vollständig öffnet und die Ladeluftkühlerbypassleitung 35 für das Frischluft-Abgasgemisch freigibt oder vollständig schließt oder in einer weiteren Ausführungsform teilweise öffnet.

Für einen optimierten Betrieb der Verbrennungskraftmaschine 1 sind vorzugsweise weitere nicht dargestellte Sensoren im Abgastrakt 7 sowie in der Frischluftanlage 6 vorgesehen. Insbesondere können Temperatur- und/oder Drucksensoren ausgangsseitig des Abgaskrümmers 31, in den Turbinenbypassleitungen 23, 25, eingangs- und/oder ausgangsseitig oder innerhalb der Abgasreinigungseinheit 16, eingangs- und/oder ausgangsseitig des Luftfilters 8, eingangs- und/oder ausgangsseitig der Verdichter 9, 11, in den Abgasrückführungsleitungen 27, 32 und gegebenenfalls an weiteren Stellen angeordnet sein, um die Temperatur- und Druckverhältnisse in Frischluftanlage 6 und Abgastrakt 7 zu erfassen. Vorzugsweise ist ferner ein Luftmassenstromsensor stromab des Luftfilters 7 vorgesehen, um den Frischluftmassenstrom zu erfassen. Weiterhin sind vorzugsweise Abgassensoren im Abgastrakt 7, wie beispielsweise eine Lambdasonde im Abgaskrümmer 31 und vor und/oder nach oder innerhalb der Abgasreinigungseinheit 16 vorgesehen. Die Signale der vorhandenen Sensoren sind von einer nicht dargestellten Steuer- und Regeleinrichtung verarbeitbar, welche anhand der Signale und gespeicherten Kennlinien und Kennfeldern Betriebszustände der Verbrennungskraftmaschine 1 allgemein, insbesondere im Abgastrakt 7 und in der Frischluftanlage 6 ermitteln und durch Ansteuerung von Stellgliedern gesteuert und/oder geregelt einstellen kann. Insbesondere sind Abgasrückführmassenströme im Nieder- und Hochdruckpfad sowie ein Lastzustand der Verbrennungskraftmaschine 1 in Bezug auf Drehmoment bzw. Mitteldruck sowie Drehzahl ermittel- bzw. einstellbar

Bei der Durchführung des erfindungsgemäßen Verfahrens wird die Verbrennungskraftmaschine 1 bei einem Kaltstart und/oder einem Warmlauf der Verbrennungskraftmaschine 1 mit einem Kaltstartmotorbetriebsverfahren mit vorgebbaren Werten für vorgebbare Verbrennungskraftmaschinebetriebsgrößen betrieben. Dabei werden der Kaltstart und/oder der Warmlauf der Verbrennungskraftmaschine 1 in Abhängigkeit einer Rußbeladung des Partikelfilters 19 der Abgasreinigungseinheit 16 gesteuert und/oder geregelt. Dabei werden drei Betriebszustände des Partikelfilters 19 berücksichtigt.

In einem ersten, unbeladenen Zustand des Partikelfilters 19 ist kein Ruß im Partikelfilter 19 abgelagert oder gespeichert. Bei einem solchen unbeladenen Partikelfilter 19 wird eine Aufheizung der Abgasreinigungseinheit 16 mit einem vorgebbaren maximalen Temperaturgradienten auf eine vorgebbare Betriebstemperatur durchgeführt. Dabei kann diese vorgebbare Betriebstemperatur beispielsweise oberhalb von 550 Grad Celsius, mithin oberhalb einer Entzündungstemperatur des Rußes, liegen Dies ermöglicht eine besonders schnelle Aufheizung der gesamten Abgasreinigungseinheit 16, wobei keine Entzündung des Rußes im Partikelfilter 19 auftreten kann, und eine daraus resultierende schnelle Betriebsbereitschaft der Abgasreinigungseinheit 16 und eine effiziente Abgasreinigung.

Dabei werden vor allem Abgasreinigungskomponenten, welche insbesondere eine sogenannte selektive katalytische Reduktion ermöglichen, beispielsweise der Partikelfilter 19 und/oder der SCR-Katalysator 30 aufgeheizt, so dass sie schnell ihre Betriebstemperatur erreichen und dabei minimierte Kohlenwasserstoff-, Kohlenmonoxid- und/oder Stickoxid-Emissionen zu verursachen.

Zweckmäßigerweise wird bei einem unbeladenen Partikelfilter 19 eine derartige Steuerung und/oder Regelung der Verbrennungskraftmaschine 1 durchgeführt, dass ein sogenannter Start-Stopp-Betrieb der Verbrennungskraftmaschine 1 deaktiviert wird. Dadurch ist eine Unterbrechung des Betriebs der Verbrennungskraftmaschine 1 in einer Warmlaufphase und eine daraus resultierende Aus- oder Abkühlung der Abgasreinigungseinheit 16 sicher vermieden.

In einem zweiten, beladenen Zustand des Partikelfilters 19 ist selbiger vollständig oder nahezu vollständig mit Ruß beladen. Ein solcher beladener Zustand des Partikelfilters 19 wird beispielsweise bei einer Partikeldichte größer als vier Gramm je Liter angenommen. Bei einem solchen beladenen Partikelfilter 19 wird bei einem Kaltstart oder während einer Warmlaufphase eine derartige Aufheizung der Abgasreinigungseinheit 16 durchgeführt, dass eine Temperatur im Partikelfilter 19 unterhalb einer Entzündungstemperatur des gespeicherten Rußes eingestellt wird. Dadurch ist eine unkontrollierte Entzündung des mit Ruß beladenen Partikelfilters 19 und eine daraus resultierende unkontrollierte exothermische Reaktion, welche den Partikelfilter 19 und/oder andere Abgasreinigungskomponenten der Abgasreinigungseinheit 16 schädigen oder zerstören kann, sicher vermieden.

Weiterhin wird bei einem beladenen Partikelfilter 19 eine derartige Steuerung und/oder Regelung der Verbrennungskraftmaschine 1 durchgeführt, dass ein Lambdawert der Verbrennung innerhalb der Verbrennungskraftmaschine unterhalb eines vorgebbaren Wertes gehalten wird. Dabei ist beispielweise ein Lambdawert kleiner als 1,2 einstellbar. Dadurch ist ein Eintrag von Sauerstoff in den Abgastrakt minimiert, so dass ein Sauerstoffangebot für eine Rußoxidation vorteilhafterweise vermindert ist.

Besonders bevorzugt wird bei einem beladenen Partikelfilter 19 eine derartige Steuerung und/oder Regelung der Verbrennungskraftmaschine 1 durchgeführt, dass ein Abgasmassenstrom maximiert wird, so dass eine Aufheizung der Abgasreinigungseinheit 16 derart beschleunigt wird.

Zweckmäßigerweise wird bei einem beladenen Partikelfilter 19 eine derartige Steuerung und/oder Regelung der Verbrennungskraftmaschine 1 durchgeführt, dass ein sogenannter Start-Stopp-Betrieb der Verbrennungskraftmaschine 1 deaktiviert wird. Dadurch ist eine Unterbrechung des Betriebs der Verbrennungskraftmaschine 1 in einer Warmlaufphase und eine daraus resultierende Aus- oder Abkühlung der Abgasreinigungseinheit 16 sicher vermieden.

Alle vorgenannten und beschriebenen Maßnahmen können bei einem Kaltstart oder während einer Warmlaufphase der Verbrennungskraftmaschine 1 einzeln oder bevorzugt gemeinsam durchgeführt werden.

In einem dritten, teilbeladenen Zustand des Partikelfilters 19 ist selbiger teilweise oder abschnittsweise mit Ruß beladen. Ein solcher teilbeladener Zustand des Partikelfilters 19 wird beispielsweise bei einer Partikeldichte kleiner als vier Gramm je Liter, insbesondere kleiner als drei Gramm je Liter, angenommen. Bei einem solchen teilbeladenen Partikelfilter 19 wird besonders bevorzugt eine Aufheizung der Abgasreinigungseinheit 16 mit einem vorgebbaren maximalen Temperaturgradienten auf eine vorgebbare Betriebstemperatur, welche oberhalb einer Entzündungstemperatur des gespeicherten Rußes liegt, durchgeführt, wobei eine Entzündung des Rußes erfolgt und eine daraus resultierende Aufheizung der Abgasreinigungseinheit 16.

Somit wird der Partikelfilter 19 mit einer gesteuerten und/oder geregelten Rußoxidation auf eine vorgebbare Betriebstemperatur aufgeheizt. Dies ermöglicht einen kontrollierten Abbau des im Partikelfilter 19 gespeicherten Rußes, wobei gleichzeitig eine kontrollierte Aufheizung des Partikelfilters 19 und/oder der Abgasreinigungseinheit 16 ermöglicht ist. Somit kann das Aufheizverhalten der Abgasreinigungseinheit 16 in vorteilhafter Weise durch eine kontrollierte Russoxidation unterstützt und beschleunigt werden.

In einer besonders vorteilhaften Ausführungsform wird ein beladener Partikelfilter 19 im Betrieb der Verbrennungskraftmaschine 1 nicht vollständig auf einen unbeladenen Zustand regeneriert, sondern auf einen teilbeladenen Zustand mit einem vorgebbaren Wert der Rußbeladung. Dadurch ist mittels des im Partikelfilter 19 verbleibenden Restrußes eine Rußabscheideeffektivität des Partikelfilters 19 steigerbar. Dadurch können porösere Partikelfiltersubstrate, welche insbesondere eine sogenannte selektive katalytische Reduktion ermöglichen, eingesetzt werden.

Besonders vorteilhafterweise ist ein herkömmlicher Start-Stopp-Betrieb der Verbrennungskraftmaschine 1 durchführbar, da die Rußoxidation der üblicherweise bei Unterbrechung des Betriebs der Verbrennungskraftmaschine 1 auftretenden Aus- oder Abkühlung der Abgasreinigungseinheit 16 entgegenwirkt.

Durch die beschriebene zusätzliche Rußoxidation während des Kaltstarts oder während einer Warmlaufphase der Verbrennungskraftmaschine müssen die herkömmlichen Regenerationsintervalle des Partikelfilters 19 vorteilhafterweise nicht verändert werden.

Eine Rußbeladung des Partikelfilters 19 ist in herkömmlicher Weise anhand einer Differenzdruckmessung eines Abgasgegendrucks vor und nach dem Partikelfilter 19 ermittelbar.

Da der Differenzdruck in Abhängigkeit von Motordrehzahl, Lastzustand der Verbrennungskraftmaschine 1 und Beladungsmenge des Partikelfilters 19 variiert, sind diese Parameter bevorzugt in einem Kennfeld erfasst. Die Überwachung des Differenzdrucks sowie die Einleitung und die Steuerung und/oder Regelung der Regeneration des Partikelfilters 19 werden mittels einer nicht dargestellten Steuereinheit der Verbrennungskraftmaschine 1 durchgeführt.

Weiterhin ist in der Steuereinheit ein Berechnungsmodell einer Rußbeladung des Partikelfilters 19 in Abhängigkeit von auftretenden Betriebszuständen der Verbrennungskraftmaschine 1 hinterlegt, um bei einem Kaltstart einen Beladungszustand des Partikelfilters 19 zu ermitteln.

Bevorzugter Weise werden während des Betriebs der Verbrennungskraftmaschine 1 die Parameter des Berechnungsmodells und der Differenzdruckmessung miteinander abgeglichen.

### Bezugszeichenliste

- 1: Verbrennungskraftmaschine
- 2: Motorblock
- 3: Arbeitszylinder
- 4: Hochdruckpumpe
- 5: Einspritzdüse
- 6: Frischluftanlage
- 7: Abgastrakt
- 8: Luftfilter
- 9: erster Verdichter
- 10: Niederdruck-Abgasturbolader
- 11: zweiter Verdichter
- 12: Hochdruck-Abgasturbolader
- 13: Ladeluftkühler
- 14: erste Turbine
- 15: zweite Turbine
- 16: Abgasreinigungseinheit
- 17: Abgasaufstauklappe
- 18: Oxidationskatalysator
- 19: Partikelfilter
- 20: Dosierventil
- 21: Verdichterbypassleitung
- 22: Verdichterbypassventil
- 23: erste Turbinenbypassleitung
- 24: erstes Turbinenbypassventil
- 25: zweite Turbinenbypassleitung
- 26: zweites Turbinenbypassventil
- 27: Niederdruck-Abgasrückführungs-Leitung
- 28: Niederdruck-Abgasrückführungs-Kühler
- 29: Niederdruck-Abgasrückführungs-Ventil
- 30: SCR-Katalysator
- 31: Abgaskrümmer
- 32: Hochdruck-Abgasrückführungs-Leitung
- 33: Hochdruck-Abgasrückführungs-Ventil
- 34: Hochdruck-Abgasrückführungs-Kühler
- 35: Ladeluftkühlerbypassleitung

## Patentansprüche

1. Verfahren zum Betreiben einer Verbrennungskraftmaschine (1) mit einer Abgasreinigungseinheit (16) umfassend einen Partikelfilter (19), bei welchem in Verbindung mit einem Kaltstart und/oder einem Warmlauf der Verbrennungskraftmaschine (1) die Verbrennungskraftmaschine (1) mit einem Kaltstartmotorbetriebsverfahren mit vorgebbaren Werten für vorgebbare Verbrennungskraftmaschinenbetriebsgrößen betrieben wird,
**dadurch gekennzeichnet,**
**dass** der Kaltstart und/oder der Warmlauf der Verbrennungskraftmaschine (1) in Abhängigkeit von einer Rußbeladung des Partikelfilters (19) derart gesteuert und/oder geregelt wird, dass
- bei einem im Wesentlichen unbeladenen Partikelfilter (19) eine Aufheizung der Abgasreinigungseinheit (16) mit einem vorgebbaren maximalen Temperaturgradienten auf eine vorgebbare Betriebstemperatur durchgeführt wird, und
- bei einem Partikelfilter (19) mit einer einen vorgebbaren ersten Schwellenwert überschreitenden Rußbeladung eine derartige Aufheizung der Abgasreinigungseinheit (16) durchgeführt wird, dass eine Temperatur im Partikelfilter (19) unterhalb einer Entzündungstemperatur des gespeicherten Rußes bleibt.

2. Verfahren nach Anspruch 1,
**dadurch gekennzeichnet, dass**
bei einem im Wesentlichen unbeladenen Partikelfilter (19) eine Aufheizung der Abgasreinigungseinheit (16) mit einem Temperaturgradienten von etwa 100 °C je Minute bis 500 °C je Minute erfolgt.

3. Verfahren nach Anspruch 1,
**dadurch gekennzeichnet, dass**
der erste Schwellenwert mehr als 5 Gramm je Liter beträgt.

4. Verfahren nach Anspruch 1,
**dadurch gekennzeichnet, dass**
bei einem teilbeladenen Partikelfilter (19) mit einer einen vorgebbaren zweiten Schwellenwert unterschreitenden Rußbeladung eine Aufheizung der Abgasreinigungseinheit (16) mit einem vorgebbaren maximalen Temperaturgradienten auf eine vorgebbare Betriebstemperatur, welche oberhalb einer Entzündungstemperatur des gespeicherten Rußes liegt, durchgeführt wird, wobei eine Entzündung des Rußes erfolgt.

5. Verfahren nach Anspruch 4,
**dadurch gekennzeichnet, dass**
der zweite Schwellenwert weniger als 4 Gramm je Liter beträgt.

6. Verfahren nach Anspruch 1,
**dadurch gekennzeichnet, dass** bei einer Aufheizung der Abgasreinigungseinheit (16) mit einem den vorgebbaren ersten Schwellenwert überschreitenden Rußbeladung aufweisenden Partikelfilter (19) eine derartige Steuerung und/oder Regelung der Verbrennungskraftmaschine (1) durchgeführt wird, dass ein Lambdawert der Verbrennung innerhalb der Verbrennungskraftmaschine (1) unterhalb eines vorgebbaren Wertes gehalten oder eingestellt wird.

7. Verfahren nach Anspruch 6,
**dadurch gekennzeichnet, dass**
eine derartige Steuerung und/oder Regelung der Verbrennungskraftmaschine (1) durchgeführt wird, dass ein Abgasmassenstrom maximiert wird.

8. Verfahren nach Anspruch einem der vorherigen Ansprüche,
**dadurch gekennzeichnet, dass**
ein Start-Stopp-Betrieb der Verbrennungskraftmaschine (1) deaktiviert wird.

9. Vorrichtung zum Betreiben einer Verbrennungskraftmaschine (1) mit einer Abgasreinigungseinheit (16) umfassend einen Partikelfilter (19), bei welcher in Verbindung mit einem Kaltstart und/oder einem Warmlauf der Verbrennungskraftmaschine (1) die Verbrennungskraftmaschine (1) mit einem Kaltstartmotorbetriebsverfahren mit vorgebbaren Werten für vorgebbare Verbrennungskraftmaschinebetriebsgrößen betreibbar ist,
**dadurch gekennzeichnet, dass**
der Kaltstart und/oder der Warmlauf der Verbrennungskraftmaschine (1) in Abhängigkeit von einer Rußbeladung eines Partikelfilters (19) der Abgasreinigungseinheit (16) derart steuer- und/oder regelbar ist, dass
- bei einem im Wesentlichen unbeladenen Partikelfilter (19) eine Aufheizung der Abgasreinigungseinheit (16) mit einem vorgebbaren maximalen Temperaturgradienten auf eine vorgebbare Betriebstemperatur durchgeführt wird, und
- bei einem Partikelfilter (19) mit einer einen vorgebbaren ersten Schwellenwert überschreitenden Rußbeladung eine derartige Aufheizung der Abgasreinigungseinheit (16) durchgeführt wird, dass eine Temperatur im Partikelfilter (19) unterhalb einer Entzündungstemperatur des gespeicherten Rußes bleibt.

## Claims

1. Method for operating an internal combustion engine (1) with an exhaust gas purification unit (16) comprising a particulate filter (19), in which method the internal combustion engine (1) is, in connection with a cold start or a warm-up of the internal combustion engine (1), operated using a cold start engine operating method with presettable values for presettable internal combustion engine operating variables,
**characterised in that**
the cold start and/or the warm-up of the internal combustion engine (1) is, as a function of a particulate load of the particulate filter (19), controlled in an open and/or closed loop in such a way that
- if the particulate filter (19) is substantially unloaded, the exhaust gas purification unit (16) is heated with a presettable maximum temperature gradient to a presettable operating temperature, and
- if the particulate filter (19) has a particulate loading exceeding a presettable first threshold value, the exhaust gas purification unit (16) is heated in such a way that a temperature in the particulate filter (19) remains below an ignition temperature of the stored particulates.

2. Method according to claim 1,
**characterised in that**
if the particulate filter (19) is substantially unloaded, the exhaust gas purification unit (16) is heated with a temperature gradient of approximately 100°C per minute to 500 °C per minute.

3. Method according to claim 1,
**characterised in that**
the first threshold value is more than 5 grams per litre.

4. Method according to claim 1,
**characterised in that**
if the particulate filter (19) is partially loaded with particulates below a presettable second threshold value, the exhaust gas purification unit (16) is heated with a presettable maximum temperature gradient to a presettable operating temperature above an ignition temperature of the stored particulates, the particulates being ignited.

5. Method according to claim 4,
**characterised in that**
the second threshold value is less than 4 grams per litre.

6. Method according to claim 1,
**characterised in that**
if the exhaust gas purification unit (16) with a particulate filter (19) having a particulate loading above the presettable first threshold value is heated, the internal combustion engine (1) is controlled in an open and/or closed loop in such a way that a lambda value of the combustion within the internal combustion engine (1) is held or adjusted below a presettable value.

7. Method according to claim 6,
**characterised in that**
the internal combustion engine (1) is controlled in an open and/or closed loop in such a way that an exhaust gas mass flow rate is maximised.

8. Method according to any of the preceding claims,
**characterised in that**
a start/stop mode of the internal combustion engine (1) is deactivated.

9. Device for operating an internal combustion engine (1) with an exhaust gas purification unit (16) comprising a particulate filter (19), wherein the internal combustion engine (1) can, in connection with a cold start or a warm-up of the internal combustion engine (1), be operated using a cold start engine operating method with presettable values for presettable internal combustion engine operating variables,
**characterised in that**
the cold start and/or the warm-up of the internal combustion engine (1) can, as a function of a particulate load of the particulate filter (19), be controlled in an open and/or closed loop in such a way that
- if the particulate filter (19) is substantially unloaded, the exhaust gas purification unit (16) is heated with a presettable maximum temperature gradient to a presettable operating temperature, and
- if the particulate filter (19) has a particulate loading exceeding a presettable first threshold value, the exhaust gas purification unit (16) is heated in such a way that a temperature in the particulate filter (19) remains below an ignition temperature of the stored particulates.

## Revendications

1. Procédé de fonctionnement d'un moteur à combustion interne (1) équipé d'un module d'épuration des gaz d'échappement (16) comprenant au moins un filtre à particules (19), en liaison avec un démarrage à froid et/ou une marche à chaud du moteur à combustion interne (1), le moteur à combustion interne (1) fonctionnant selon un procédé de fonctionnement à démarrage à froid selon des valeurs prédéfinies pour des grandeurs de fonctionnement prédéfinies du moteur à combustion interne, **caractérisé en ce que** le démarrage à froid et/ou la marche à chaud du moteur à combustion interne (1) est commandé(e) et/ou régulé(e) en fonction de la charge en suie du filtre à particules (19) de manière qu'en cas de filtre à particules (19) sensiblement non chargé, un réchauffement de l'unité d'épuration des gaz d'échappement (16) se produise selon un gradient de température maximal prédéfini à une température de fonctionnement prédéfinie, et en cas de filtre à particules (19) ayant une masse de suie dépassant une première valeur prédéfinie, un tel réchauffement de l'unité d'épuration des gaz d'échappement (16) se produit de sorte qu'une température dans le filtre à particules (19) demeure inférieure à une température d'inflammation de la suie stockée.

2. Procédé selon la revendication 1, **caractérisé en ce qu'**en cas de filtre à particules (19) sensiblement non chargé, un réchauffement de l'unité d'épuration des gaz d'échappement (16) se produit selon un gradient de température compris environ entre 100 °C par minute et 500 °C par minute.

3. Procédé selon la revendication 1, **caractérisé en ce que** la première valeur seuil est supérieure à 5 grammes par litre.

4. Procédé selon la revendication 1, **caractérisé en ce qu'**en cas de filtre à particules (19) partiellement chargé présentant une masse de suie dépassant vers le bas une seconde valeur seuil prédéfinie, un réchauffement de l'unité d'épuration des gaz d'échappement (16) se produit selon un gradient de température maximal prédéfini à une température de fonctionnement prédéfinie, qui est supérieure à une température d'inflammation de la suie stockée, l'inflammation de la suie se produisant.

5. Procédé selon la revendication 4, **caractérisé en ce que** la seconde valeur seuil est inférieure à 4 grammes par litre.

6. Procédé selon la revendication 1, **caractérisé en ce que** lors d'un réchauffement de l'unité d'épuration des gaz d'échappement (16) lorsqu'un filtre à particules (19) présente une masse de suie dépassant la première valeur seuil prédéfinie, une telle commande et/ou régulation du moteur à combustion interne (1) est exécutée de sorte qu'une valeur lambda de la combustion dans le moteur à combustion interne (1) soit maintenue ou réglée en dessous d'une valeur prédéfinie.

7. Procédé selon la revendication 6, **caractérisé en ce qu'**une telle commande et/ou régulation du moteur à combustion interne (1) est exécutée de sorte qu'un flux massique de gaz d'échappement soit augmenté le plus possible.

8. Procédé selon l'une quelconque des revendications précédentes, **caractérisé en ce qu'**un fonctionnement marche/arrêt du moteur à combustion interne (1) est désactivé.

9. Procédé de fonctionnement d'un moteur à combustion interne (1) équipé d'une unité d'épuration des gaz d'échappement (16) comprenant un filtre à particules (19) selon lequel en association avec un démarrage à froid et/ou une marche à chaud du moteur à combustion interne (1), le moteur à combustion interne (1) peut fonctionner selon un procédé de fonctionnement de démarrage à froid selon des valeurs prédéfinies pour des grandeurs de fonctionnement prédéfinies du moteur à combustion interne, **caractérisé en ce que** le démarrage à froid et/ou la marche à chaud du moteur à combustion interne (1) peut être commandé(e) et/ou régulé(e) en fonction de la masse de suie d'un filtre à particules (19) de l'unité d'épuration des gaz d'échappement (16) de telle sorte qu'en cas de filtre à particules (19) sensiblement non chargé, un réchauffement de l'unité d'épuration des gaz d'échappement(16) se produise selon un gradient de température maximal prédéfini à une température de fonctionnement prédéfinie, et en cas de filtre à particules (19) présentant une masse de suie supérieure à une première valeur seuil prédéfinie, un tel réchauffement de l'unité d'épuration des gaz d'échappement (16) se produit de sorte qu'une température dans le filtre à particules (19) demeure inférieure à une température d'inflammation de la suie stockée.
